(19) Europäisches Patentamt
European Patent Office
Office européen des brevets

(11) Veröffentlichungsnummer: **0 279 289 B1**

(12) **EUROPÄISCHE PATENTSCHRIFT**

(45) Veröffentlichungstag der Patentschrift: **06.09.95**

(51) Int. Cl.$^{6}$: **C08G 2/28**

(21) Anmeldenummer: **88101595.2**

(22) Anmeldetag: **04.02.88**

# (54) Kontinuierliches Verfahren zur Entfernung instabiler Anteile aus rohem Oxymethylencopolymerisat.

(30) Priorität: **07.02.87 DE 3703790**

(43) Veröffentlichungstag der Anmeldung:
**24.08.88 Patentblatt 88/34**

(45) Bekanntmachung des Hinweises auf die Patenterteilung:
**06.09.95 Patentblatt 95/36**

(84) Benannte Vertragsstaaten:
**AT BE CH DE FR GB IT LI NL SE**

(56) Entgegenhaltungen:
**DE-A- 1 246 244**
**FR-A- 2 374 365**
**US-A- 4 065 532**

(73) Patentinhaber: **HOECHST AKTIENGESELLSCHAFT**

**D-65926 Frankfurt am Main (DE)**

(72) Erfinder: **Sextro, Günter, Dr.**
**Erbsenacker 43**
**D-6200 Wiesbaden (DE)**
Erfinder: **Mück, Karl-Friedrich, Dr.**
**Wittenberger Strasse 17**
**D-6200 Wiesbaden (DE)**
Erfinder: **Burg, Karlheinz, Dr.**
**Eichenweg 1**
**D-6200 Wiesbaden (DE)**
Erfinder: **Fischer, Eberhard, Dr.**
**Am Waldeck 8**
**D-6233 Kelkheim**
**Taunus (DE)**

**EP 0 279 289 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein kontinuierliches Verfahren zur Entfernung instabiler Anteile aus rohem Oxymethylencopolymerisat, bei dem die Verfahrensweise so geführt wird, daß das Rohpolymerisat sofort nach Beendigung des Polymerisationsschrittes vollständig aufgeschmolzen wird, ohne daß Desaktivatoren und Hilfsmittel zugegen sind und diese erst anschließend in einer Druckzone in die Polymerschmelze eingearbeitet werden.

Die Herstellung von Oxymethylencopolymeren durch Copolymerisation von Formaldehyd oder cyclischen Oligomeren des Formaldehyds, vorzugsweise 1.3.5-Trioxan, mit geeignetem Comonomeren wie cyclischen Äthern und Acetalen in Gegenwart von kationischen Polymerisationskatalysatoren ist bekannt (US-PS 3.027.352 und 3.803.094).

Es ist weiter bekannt, daß die bei der Polymerisation entstehenden rohen Oxymethylencopolymeren eine ungenügende thermische Stabilität aufweisen. Es ist daher notwendig, die erhaltenen Copolymere speziellen Aufarbeitungsschritten zu unterwerfen, bevor sie nach üblichen Formgebungsverfahren zu Formkörpern, Fäden, Folien usw. verarbeitet werden. Wenn der kationische Polymerisationskatalysator in dem erhaltenen Copolymer verbleibt und nicht inaktiviert wird, wird das Copolymer graduell depolymerisiert, wodurch es zu einer merklichen Erniedrigung des Molekulargewichts kommt.

Die bekannten Aufarbeitungsschritte beziehen sich a) auf eine Desaktivierung saurer Katalysatorbestandteile, sowie auf Entfernung von b) nicht umgesetzten Monomeren, und c) instabilen Kettenenden. Zum Schutz des Polymeren gegen Wärme, Sauerstoff, Licht und saure Substanzen werden im allgemeinen geeignete Stabilisatoren eingearbeitet (d). Diese können an verschiedenen Stellen des Aufarbeitungsprozesses zugegeben werden.

Die Maßnahmen (a) bis (d) und die Art ihrer Kombination sind bei den verschiedenen bekannten Aufarbeitungsformen unterschiedlich. Die Desaktivierung saurer Katalysatorbestandteile (a) und die Entfernung nicht umgesetzter Monomerer (b) wurden in verschiedenen Verfahren beschrieben.

Die Copolymerisation von Trioxan mit cyclischen Äthern und Acetalen verläuft im allgemeinen nicht vollständig. Je nach Polymerisationsverfahren und -bedingungen werden z.B. 10 bis 50 % der Monomeren bei der Reaktion nicht umgesetzt und verbleiben im Polymerisationsaggregat, das sie gasförmig und/oder in mit dem Polymerisat verbundener Form verlassen. Die Abtrennung und Rückgewinnung der nicht umgesetzten Monomeren erfordert einen erheblichen Zeit- und Arbeitsaufwand.

Es war bekannt, die Aufarbeitung von Polyoxymethylenen durch Desaktivierung des verwendeten Katalysators in wäßriger Phase oder in einem organischen Lösungsmittel für Trioxan und nachfolgenden Filtrations-, Wasch- und Trocknungsschritten durchzuführen. Diese Arbeitsweise war aufwendig, wobei große Lösungsmittelmengen zur Rückgewinnung der Monomeren erforderlich waren. Sie wurde jedoch für notwendig erachtet, um einen übermäßigen Abbau des Polymerisats zu vermeiden.

Es ist beschrieben worden, eine Abtrennung der Restmonomeren aus rohen Oxymethylencopolymeren durch Behandlung mit einem inerten Gas bei erhöhter Temperatur (115 bis 170 °C) in Gegenwart von thermischen Stabilisatoren und/oder gasförmigen Desaktivatoren z.B. aliphatischen Aminen durchzuführen. Die Desaktivierung (a), das Entfernen der Restmonomeren (b) und das Einarbeiten von Stabilisatoren (d) wurden gleichzeitig in einem einzigen Verfahrensschritt durchgeführt. An diesem Verfahren ist nachteilig, daß die Restmonomeren zwar nicht aus großen Lösungsmittelmengen, dafür jedoch aus großen Trägergasmengen zurückgewonnen werden müssen. Die Behandlungszeiten erfordern mit 5 Minuten bis 8 Stunden, selbst im bevorzugten Bereich von 20 Minuten bis einer Stunde, entsprechend große technische Aparaturen. Über eine gezielte Entfernung instabiler Kettenenden wird nichts ausgesagt (US-PS 3 210 322)

In ähnlicher Weise wird auch die Verwendung von flüssigen Lösungsmitteln vermieden und das Rohpolymerisat mit Desaktivatoren in der Gasphase behandelt und zwar in einem bestimmten Temperaturbereich, der keinen Abbau oder Depolymerisation des erzeugten Copolymeren bewirkt. Dabei soll ein Schmelzen des Copolymeren vermieden werden. Bei dieser Verfahrensweise wird also die Bedeutung der Temperatur hervorgehoben, wobei für unterschiedliche Desaktivatoren unterschiedliche Temperaturbereiche angegeben werden (DE-OS 33 11 154).

Auch ist bekannt, daß rohe Oxymethylencopolymere bei Abwesenheit erheblicher Mengen von Trioxan, d.h. von Restmonomeren, durch saure Katalysatorreste abgebaut werden. Das Verfahren gemäß dieser Patentschrift schreibt daher vor, die Desaktivierung (a) der Katalysatorreste vor der Entfernung der Restmonomeren (b) durchzuführen (US-PS 2 989 509).

Ferner ist ein Verfahren zum Entfernen flüchtiger Anteile aus Polyformaldehyd beschrieben worden, bei dem die Schmelze des Rohpolymerisats in üblichen Entgasungsvorrichtungen, z.B. Extruder unter Druck mit Wasserdampf in Berührung gebracht wird. Im Beispiel 1 dieser Schrift wird vor dem Aufschmelzen ein Desaktivator zugegeben, während im Beispiel 2 das Rohpolymerisat durch Trocknen im festen Zustand von

Monomeren befreit wird, bevor die Schmelze mit Wasserdampf behandelt wird. Da im Beispiel 2 ein Hinweis auf die Verwendung eines Desaktivators fehlt, ist davon auszugehen, daß bei dieser Verfahrensstufe ein beträchtlicher Abbau des Polymeren stattfindet (DE-OS 1 595 340).

Aus den vorgenannten Patentanmeldungen wird deutlich, daß die beschrieben Schritte (a) und (b) sowohl einzeln als auch in Kombination entscheidende Bedeutung für die Qualität des Endprodukts haben.

In der Regel folgt auf die Schritte (a) und (b) die Entfernung instabiler Anteile (c). Hierunter ist sowohl die chemische Reaktion der Abspaltung instabiler Kettenenden als auch deren physikalische Abtrennung durch z.B. Entgasung zu verstehen. In einigen der vorgenannten Anmeldungen ist Schritt (c) gleichfalls beschrieben, wobei über die Vollständigkeit des Schrittes jedoch im allgemeinen keine Angaben gemacht werden.

Die gezielte Entfernung instabiler Anteile in einem kontinuierlichen Schmelzverfahren ist ebenfalls beschrieben worden. Hierbei wird das Rohpolymerisat zusammen mit alkalisch wirkenden Verbindungen rasch unter intensivem Kneten geschmolzen und in geschmolzenem Zustand durch eine unter Vakuum stehende Zone einer Entgasungsvorrichtung transportiert. Als wesentlicher Schritt wird bei diesem Verfahren angesehen, daß man das Rohpolymerisat unter Zusatz der genannten Verbindungen, die den Katalysator inaktivieren, vorwiegend mit Hilfe mechanischer Energie aufschmilzt (DE-AS 12 46 244),
Gleichzeitig mit einem der Schritte a) bis c), oder aber nachträglich, erfolgt der Zusatz von geeigneten Stabilisatoren (d).

Es ist ferner bekannt, daß thermoplastische Polymere z.B. auch Polyacetale, in die Additive eingearbeitet werden, von flüchtigen Verbindungen befreit werden können, in dem in einen horizontalen Entgasungsextruder erst die Additive eingebracht werden und danach in den Additivschmelzestrom die Polymerschmelze von unten zudosiert wird, wobei die Hauptentgasungsöffnung senkrecht über der Einführungsöffnung des Polymers angebracht ist (US-A 4 065 532). Dieses Verfahren betrifft die gleichzeitige Zumischung von Additiven und Entfernung von flüchtigen Bestandteilen während der Nachbehandlung von Kunststoffschmelzen bei sehr hohen Durchsätzen.

In einer weiteren Veröffentlichung werden Stabilisatoren zusammen mit dem Polymeren aufgeschmolzen und die Mischung in der Schmelze mindestens 2 Minuten erhitzt (DE-A 2 754 690).

Aus den vorstehend genannten Druckschriften wird die Bedeutung dieser Schritte für die Wirtschaftlichkeit des Verfahrens und für die Qualität des Fertigprodukts deutlich.

So kann in Abhängigkeit von vielen Einzelgrößen (Korngröße des Rohpolymeren, Temperatur, Verweilzeit, Desaktivatorart und -menge, Katalysatorart und -menge, mechanische Durchmischung usw.) eine mehr oder minder starke Schädigung des Rohpolymeren eintreten, die sich z.B. in einem Anstieg von Schmelzindex und instabilen Anteilen Zu erkennen gibt. Problematisch ist auch, daß die Restmonomeren z.T. aus größeren Lösungsmittel- oder größeren Trägergasmengen zurückgewonnen werden müssen. Sind flüchtige Desaktivatoren zugegen, stellt sich die zusätzliche Aufgabe der Trennung von den Restmonomeren. Insgesamt ist die Wiedergewinnung der erneut einsetzbaren Restmonomeren umständlich und unwirtschaftlich.

Es war daher erwünscht, stabilisierte, quantitativ und qualitativ hochwertige Oxymethylencopolymerisate schneller, einfacher und wirtschaftlicher nach einem kontinuierlich arbeitenden Verfahren herzustellen, als dies bisher bei den bekannten Verfahren möglich war.

Die Erfindung betrifft ein kontinuierliches Verfahren zur Entfernung instabiler Anteile aus rohem Oxymethylencopolymerisat, hergestellt durch Polymerisation von Trioxan mit dafür bekannten Comonomeren, das noch Katalysatoren, monomere Ausgangsstoffe und instabile Anteile enthält, durch Behandlung des durch Massepolymerisation von Trioxan mit Comonomeren in einer Polymerisationseinheit bei einer Temperatur über 65 °C hergestellten Copolymerisats mit basischen Verbindungen als Desaktivatoren in An- oder Abwesenheit von Hilfsmitteln in einer Druckzone, dadurch gekennzeichnet, daß das Rohpolymerisat unmittelbar nach Beendigung des Polymerisationsschrittes in Abwesenheit von Desaktivatoren und Hilfsmitteln vollständig aufgeschmolzen wird und die Desaktivatoren allein oder zusammen mit Hilfsmittels anschließend mindestens in einer Druckzone in die erhaltene Polymerschmelze unter Druck eingearbeitet und erst danach in einer Entspannungszone die flüchtigen Anteile in An- oder Abwesenheit von Stabilisatoren entfernt werden.

Es war überraschend, daß ein Trennen von gasförmigen und festen Produkten am Ende der Polymerisationsreaktion - verbunden mit unmittelbar darauffolgendem Aufschmelzen des festen Produktes - in Abwesenheit von Desaktivatoren und Hilfsmitteln ohne Schädigung des Rohpolymerisats möglich ist. Desaktivatoren und gegebenenfalls Hilfsmittel werden erst nach vollständigem Aufschmelzen des Produktes unter Druck in die Schmelze eingearbeitet.

Unter Einwirkung von Desaktivatoren und Hilfsmitteln werden instabile Anteile aus dem Polymeren abgespalten und in einer darauffolgenden Entspannungszone aus der Polymerschmelze entfernt.

Als Vorteile der erfindungsgemäßen Art der Desaktivierung sind insbesondere zu nennen:

- es werden Abbauerscheinungen vermieden (kein Anstieg von Schmelzindex und instabilen Anteilen)
- gegenüber einer Zugabe der Desaktivatoren zu dem Copolymerisat vor dem Schmelzschritt werden deutlich bessere Eigenschaftswerte erhalten,
- den Polymerisationsreaktor verlassende Reaktionsgase wie Trioxan und Formaldehyd können separat und ohne Kontamination durch Desaktivatoren und gegebenenfalls Hilfsmittel abgezogen und aufbereitet werden.
- es ergeben sich verschiedene apparative Vereinfachungen; so kann das Rohpolymerisat in der Regel ohne vorheriges Mahlen direkt aufgeschmolzen werden, ferner entfallen z.B. zusätzliche Aggregate für gleichmäßige Einmischung der Desaktivatoren und gegebenenfalls Trocknung des Rohpolymerisats.

Als Desaktivatoren werden basische Verbindungen z.B. Carbonate, Hydrogencarbonate, Hydroxyde, Phosphate und Fluoride von Alkali- und Erdalkalimetallen z.B. Natrium, Kalium, Magnesium oder Calcium, vorzugsweise aber Natrium oder aliphatische aromatische oder araliphatische Amine verwendet. Ebenso können cyanoguanidin, Melamin sowie von diesen ableitbare Substanzklassen eingesetzt werden. Vorteilhaft können auch Mischungen verwendet werden aus einem Alkalicarbonat mit einem Amin. Besonders geeignet sind tertiäre Amine, z.B. Triäthylamin, Triäthanolamin und Tri-n-butylamin. Im allgemeinen werden organische Desaktivatoren in Mengen zwischen 20 und 5.000 ppm, vorzugsweise zwischen 100 und 1.000 ppm und solche anorganischen Verbindungen z.B. Natriumcarbonat in Mengen zwischen 1 und 100, vorzugsweise zwischen 2 und 40 ppm, insbesondere zwischen 5 und 20 ppm, jeweils bezogen auf die Menge des eingesetzten Oxymethylen-Rohpolymerisats, eingesetzt

Die Desaktivatormenge muß der zu desaktivierenden Katalysatormenge und der durch Nebenreaktionen aus Formaldehyd entstehenden Ameisensäure in etwa angepaßt sein, so daß ein angenähert neutrales bis schwach basisches Medium resultiert. Bei zu geringen Desaktivatormengen kann im weiteren Verlauf der Behandlung Kettenabbau eintreten, während zu große Mengen zur Verfärbung führen können. Bei kontinuierlichem Verfahrensablauf kann die richtige Desaktivatormenge entsprechend vorgenannten Kriterien leicht eingestellt werden. Kombinationen verschiedener Desaktivatoren sind möglich.

Im allgemeinen ist es vorteilhaft, die Behandlung der Polymerschmelze mit Desaktivatoren und gegebenenfalls Hilfsmitteln in einer Druckzone und darauffolgende Entfernung flüchtiger Anteile in einer Entspannungszone d.h. Behandlung unter vermindertem Druck mehrmals, vorzugsweise alternierend, durchzuführen.

Bei Vorliegen von mehr als einer Druckzone einschließlich zugehöriger Entspannungszone im Verfahrensablauf ist es bei Verwendung von schwer- oder nichtflüchtigen Desaktivatoren (z.B. Natriumcarbonat) vorteilhaft, die Haupt- oder auch Gesamtmenge bereits in die erste Druckzone einzugeben. Im Falle flüchtiger Desaktivatoren (z.B. Triäthylamin) ist es sinnvoll, diese auch in den nachfolgenden Druckzonen zuzugeben.

Als Hilfsmittel im Sinne der Erfindung kommen Wasser und damit mischbare Alkohole z.B. Methanol, Äthanol und die verschiedenen Propanole oder Gemische dieser Komponenten in Betracht. Vorzugsweise wird jedoch Wasser verwendet.

Die Desaktivatoren und Hilfsmittel können in die Polymerschmelze an getrennten Stellen zugegeben werden, vorzugsweise werden die Desaktivatoren jedoch im Hilfsmittel gelöst und in dieser Form eindosiert. Die Eindosierung erfolgt jeweils zu Beginn der Druckzonen. Eine homogene Durchmischung mit der Polymerschmelze wird durch eine geeignete Gestaltung der Druckzone erreicht (z.B. spezieller Schneckenaufbau bei Extrudern).

Die Hilfsmittel werden in Mengen von 0 bis 20 Gew.-%, vorzugsweise 2 bis 15 Gew.-% zugegeben, insbesondere sind Mengen von 3 bis 12 Gew.-% günstig. Vorteilhaft wird die Zugabe in Teilmengen durchgeführt, so daß pro Druckzone nicht mehr als 7 Gew.-%, vorzugsweise 1 bis 6 Gew.-% eindosiert werden. Die Prozentzahlen beziehen sich auf die Menge der eingesetzten Oxymethylencopolymerisate.

Die Temperatur, der Druck und die Verweilzeit der Polymerschmelze in den verschiedenen Verfahrensabschnitten können folgende Bedingungen aufweisen:

- die Massetemperaturen liegen oberhalb des Schmelzpunktes bis max. 260 °C, vorzugsweise zwischen 170 und 230 °C und insbesondere zwischen 180 und 210 °C,
- der Massedruck in den Druckzonen liegt zwischen 5 und 100, vorzugsweise zwischen 20 und 50 bar und wird mindestens so hoch eingestellt, daß innerhalb der Druckzone keine Ausgasungen eintreten,
- die Entspannungs- und Entgasungszonen werden bei Drücken zwischen 0,001 bar und Atmosphärendruck, vorzugsweise jedoch bei 0,005 bis 0,5 bar und insbesondere bei 0,01 bis 0,2 bar gefahren, wobei im Falle einer wiederholten Entgasung unterschiedliche Drücke verwendet werden können und es am wirksamsten ist, den am stärksten verminderten Druck vorzugsweise am Verfahrensende einzusetzen,

- die Verweilzeit in den Druckzonen beträgt insgesamt 30 Sekunden bis 10 Minuten, vorzugsweise 1 bis 6 Minuten und insbesondere 1,5 bis 4 Minuten. Die notwendige Verweilzeit resultiert aus dem Zeitbedarf für das Einmischen von Desaktivatoren und Hilfsmitteln zuzüglich der Zeit für die unter Einwirkung dieser Substanzen erfolgende Abspaltungsreaktion instabiler Kettenenden.

In der bevorzugten Ausführungsform werden mindestens 2, vorzugsweise 3 Druckzonen eingesetzt, denen entsprechend je eine zugeordnete Entspannungs- oder Entgasungszone folgt. Es empfiehlt sich, einzelne Verweilzeiten in den Druckzonen von ca. 5 Sekunden nicht zu unterschreiten und die längsten Verweilzeiten dort zu wählen, wo auch die größten Hilfsmittelmengen eindosiert werden. In der Regel wird dies bei 2 oder 3 Druckzonen die 2. Zone sein.

Der Austragsteil des erfindungsgemäßen Verfahrens ist ebenfalls als Druckzone - jedoch ohne nachfolgende Entspannungs- oder Entgasungszone - ausgebildet und wird zur Unterscheidung von den vorgenannten Druckzonen mit nachfolgender Entgasungszone als Austragszone bezeichnet.

Die Zugabe von Stabilisatoren gegen Licht-, Wärme-, oxydativen und acidolytischen Abbau ebenso wie die Zugabe anderer Zuschlagstoffe kann an verschiedenen Stellen des Prozesses erfolgen. Während die Zugabe von Antioxydantien - gegebenenfalls in Teilmengen - bereits zu der zur Polymerisation eingesetzten Monomermischung oder aber an einer beliebigen anderen Stelle im Prozeß erfolgen kann, wird die Zugabe der anderen Stabilisatorkomponenten und sonstigen Zuschlagsstoffe vorzugsweise nach Entfernen der Hauptmenge der instabilen Anteile aus der Polymerschmelze erfolgen, d.h. insbesondere in die Druckzone vor der letzten Entgasungszone oder in die Austragszone selbst, wobei durch Wahl geeigneter Scherbedingungen (z.B. durch entsprechenden Schneckenaufbau) eine ausreichende Homogensierung der Additive sicherzustellen ist.

Die Gesamtdauer des erfindungsgemäßen Verfahrens beträgt 1 bis 30 Minuten, vorzugsweise 2 bis 10 Minuten und insbesondere 3 bis 7 Minuten, bezogen auf die Zeitspanne zwischen Aufschmelzen des Rohpolymerisats und Austritt der Schmelze aus dem Austragsteil.

Das Verfahren ist in der Abbildung schematisch dargestellt und wird im folgenden in einzelnen beschrieben.

Die Polymerisationsreaktion wird nach für Acetalcopolymere üblichen Verfahren auf Ein- oder Mehrwellenextrudern, Knetern oder in Mischern, Flachkammerformen usw. durchgeführt. Die Polymerisationsreaktion verläuft in einem Reaktor (1) bei Massetemperaturen oberhalb von 65 °C, vorzugsweise zwischen 70 und 125 °C, insbesondere zwischen 80 und 115 °C. Das flüssige Monomer/Katalysator-Gemisch erstarrt während der Polymerisation zu einer harten Masse, welche das Polymerisationsaggregat über einen Fallschacht (2) in Form von Teilchen bis zu ca. 3 cm Durchmesser, vorzugsweise jedoch kleiner als 1 cm, verläßt. Die entstehenden gasförmigen Reaktionsprodukte und die Restmonomeren, überwiegend Formaldehyd und Trioxan, verlassen das Polymerisationsaggregat über eine Brüdenleitung (3) und werden einer separaten Aufarbeitung zugeführt.

Die Verwendung eines inerten Trägergases für den Abtransport der Restmonomergase aus dem Polymerisationsreaktor ist möglich, doch kann auch ohne Trägergas gearbeitet werden. Belagsbildung in (3) durch Restmonomere kann durch geeignete Temperierung und/oder durch Zugabe von Wasserdampf vermieden werden.

Das den Polymerisationsreaktor verlassende Rohpolymerisat fällt ohne Zwischenlagerung in ein Aufschmelzaggregat (4). Hierzu können z.B. Ein- oder Mehrwellenextruder oder Scheibenreaktoren verwendet werden. In der Abbildung ist ein Doppelschneckenextruder dargestellt.

Das Aufschmelzen erfolgt in einer ersten Verdichtungs- und Druckzone (4a) in Abwesenheit von Desaktivatoren und/oder Hilfsmitteln und vorzugsweise in Abwesenheit von Luftsauerstoff. Die Zeitspanne zwischen Verlassen des Polymerisataggregats und Erreichen des homogenen Schmelzzustandes beträgt 3 bis 30 Sekunden, vorzugsweise 5 bis 20 Sekunden. In die vorliegende homogene Schmelze werden dann in einer Zugabezone (4b) Desaktivatoren und gegebenenfalls Hilfsstoffe unter Druck eingespritzt.

Die Schmelze wird von flüchtigen Anteilen in einer nachgeschalteten Entgasungszone (4c) befreit und kann gegebenenfalls nach Einmischen von üblichen Stabilisatoren und Passieren einer Austragszone direkt granuliert werden.

In einer bevorzugten, in der Abbildung darstellten Ausführungsform schließt sich der Entspannungszone (4c) eine weitere Druckzone an, in welche erneut Desaktivatoren und Hilfsstoffe eingemischt werden können. Diese Druckzone wird gebildet aus dem rückwärtigen Abschnitt (4d) des Doppelschneckenextruders (4) und einer als statischem Mischer (5) ausgebildeten Rohrleitung die über ein Drosselventil (5/2) mit einem nachgeschalteten Entgasungsaggregat (6) verbunden ist.

Die Gestaltung der Druckzonen ist unkritisch, sofern eine ausreichende Mischwirkung für die einzuarbeitenden Desaktivatoren und Hilfsmittel sowie die Einhaltung der Verfahrensbedingungen Temperatur, Druck, Zeit und vorzugsweise die eines engen Verweilzeitspektrums gegeben sind. Gut geeignet sind Ein- und

Mehrwellenextruder, vorzugsweise Doppelschneckenextruder sowie statische Mischer.

Die Entspannungs- und Entgasungsschritte können auf Ein-und Mehrwellenextrudern, in Flashkammern (Strangentgasung), Dünnschichtverdampfern oder Scheibenreaktoren durchgeführt werden. Die gleichen Aggregate bieten sich auch zur Einarbeitung von Stabilisatoren und Zuschlagstoffen an.

Die verschiedenen Verfahrensschritte (Reaktion, Schmelzen, Einarbeitung von Desaktivatoren und Hilfsmitteln, Entgasung, Einarbeiten von Stabilisatoren usw.) können auf mehreren hintereinandergeschalteten Aggregaten durchgeführt werden. Die Aggregate können gleicher Art oder auch unterschiedlich sein, mögliche Kombinationen sind z.B.

Doppelschneckenextruder/Doppelschneckenextruder

Doppelschneckenextruder/Statikmixer/Dünnschichtverdampfer

Einschneckenextruder/Statikmischer/Flashkammer

Selbstverständlich ist es auch möglich, alle Verfahrensschritte z.B. auf nur einem Aggregat (z.B. Doppelschneckenextruder) oder auf einer Kombination von mehr als drei zusammengeschalteten Aggregaten durchzuführen.

In der vorliegenden Ausführungsform der Abbildung ist ein Doppelschneckenextruder (6) eingezeichnet. Durch den Aufbau des Extruders ist eine wirkungsvolle Entgasung in der Entspannungszone (6a) gewährleistet; es folgt eine Verdichtungs- und Druckzone (6b), in welche Stabilisatoren und/oder erneut Hilfsmittel und Desaktivatoren zudosiert werden. Es schließt sich eine letzte Entspannungszone (6c) an, auf welche Verdichtungs- und Austragsteil (6d) des Extruders mit nachgeschalteter Strangabzugs- und Schneidvorrichtung folgen.

Unter Oxymethylenpolymeren werden im allgemeinen Poly(oxymethylene) verstanden, die in der Hauptvalenzkette neben Oxymethyleneinheiten noch 0,1 bis 20, vorzugsweise 0,5 bis 10 Gewichtsprozent Oxyalkyleneinheiten mit 2 bis 8, vorzugsweise 2, 3 oder 4 benachbarten Kohlenstoffatomen aufweisen, besonders geeignet sind Oxymethylenpolymere, deren Anteil an Oxyalkyleneinheiten 1 bis 5 Gewichtsprozent beträgt.

Die Oxymethylenpolymeren werden durch Polymerisation der Monomeren in Masse in Gegenwart kationisch wirksamer Katalysatoren hergestellt (vgl. z.B. US-Patentschrift 30 27 352). Hierbei werden als kationisch wirksame Katalysatoren

(1) Protonsäuren, z.B. Perchlorsäure, Trifluormethansulfonsäure

(2) Ester von Protonsäuren, insbesondere Ester mit niederen aliphatischen Alkoholen, z.B. Perchlorsäure-tert.-butylester,

(3) Anhydride von Protonsäuren, insbesondere gemischte Anhydride von Protonsäure mit niederen aliphatischen Carbonsäuren, z.B. Acetylperchlorat,

(4) Lewis-Säuren, insbesondere Halogenide von Bor, Zinn, Titan, Phosphor, Arsen und Antimon, z.B. Bortrifluorid, Zinntetrachlorid, Titantetrachlorid, Phosphorpentachlorid, Phosphorpentafluorid, Arsenpentafluorid und Antimonpentafluorid, und

(5) Komplexverbindungen oder salzhaltige Verbindungen, vorzugsweise Ätherate oder Oniumsalze von Lewis-Säuren, z.B. Bortrifluoriddiäthylätherat, Bortrifluorid-di-n-butylätherat, Triäthyloxoniumtetrafluoroborat, Trimethyloxoniumhexafluorophosphat, Triphenylmethylhexafluoroarsenat, Acetyltetrafluoroborat, Acetylhexafluorophosphat und Acetylhexafluoroarsenat.

verwendet.

Die Menge der bei der Copolymerisation eingesetzten Katalysatoren ist vor allem von der Stärke ihrer Wirksamkeit abhängig; im allgemeinen werden die Katalysatoren in einer Gewichtsmenge von 0,1 bis 2000, vorzugsweise 0,2 bis 500 ppm bezogen auf die Gesamtmenge der zu polymerisierenden Verbindungen, verwendet. Gut wirksame Katalysatoren wie Bortrifluorid werden zweckmäßigerweise in einer Gewichtsmenge von 10 bis 150, vorzugsweise 20 bis 100 ppm, bezogen auf die Gesamtmenge der zu polymerisierenden Verbindungen, eingesetzt. Für Komplexverbindungen oder salzartige Verbindungen der genannten Katalysatoren gelten die entsprechenden molaren Mengen. Sehr stark wirksame Katalysatoren wie Perchlorsäure und Trifluormethansulfonsäure werden in einer Menge von 0,1 bis 10, vorzugsweise 0,2 bis 5 ppm verwendet.

Im allgemeinen empfiehlt es sich, die Katalysatoren in verdünnter Form anzuwenden. Gasförmige Katalysatoren werden im allgemeinen mit einem Inertgas, z.B. Stickstoff und Edelgasen wie Argon, verdünnt, während flüssige oder feste Katalysatoren in einem inerten Lösungsmittel gelöst werden. Als Lösungsmittel sind insbesondere aliphatische oder cycloaliphatische Kohlenwasserstoffe sowie nitrierte aliphatische oder aromatische Kohlenwasserstoffe geeignet. Als Beispiele seien genannt: Cyclohexan, Methylenchlorid, Äthylenchlorid, Nitromethan, Nitrobenzol, Äthylencarbonat und Diäthylenglykoldimethyläther. Das Gewichtsverhältnis von Katalysator zu Verdünnungsmittel beträgt üblicherweise 1:5 bis 1:10 000, vorzugsweise 1:10 bis 1:100. Sehr stark wirksame Katalysatoren werden zweckmäßigerweise im Verhältnis

von 1:5000 bis 1:20 000 verdünnt.

Die Durchführung des Polymerisationsverfahrens erfolgt vorzugsweise unter einer Inertgasatmosphäre und unter Ausschluß von Feuchtigkeit; als Inertgase sind vorzugsweise Edelgase, z.B. Argon und Stickstoff geeignet.

Als Verbindungen, die mit Trioxan copolymerisierbar sind, eignen sich vor allem a) cyclische Äther mit 3, 4 oder 5 Ringgliedern, vorzugsweise Epoxide, b) cyclische Acetale, vorzugsweise Formale, mit 5 bis 11, vorzugsweise 5 bis 8 Ringgliedern und c) lineare Polyacetale, vorzugsweise Polyformale.

Als Copolymere für Trioxan sind besonders Verbindungen der Formel

$$\underline{CH_2-[CR^1H]_x-[O-(CR^2H)_z]_y-O}$$

geeignet, in der (A) $R^1$ und $R^2$ gleich oder verschieden sind und jeweils ein Wasserstoffatom, einen aliphatischen Alkylrest mit 1 bis 6, vorzugsweise 1 bis 4 Kohlenstoffatomen oder einen Phenylrest bedeuten und (a) x gleich 1, 2 oder 3 und y gleich Null ist oder (b) x gleich Null, y gleich 1, 2 oder 3 und z gleich 2 ist oder (c) x gleich Null, y gleich 1 und z gleich 3 bis 6 ist, oder (B) $R^1$ einen Alkoxymethylrest mit 2 bis 6, vorzugsweise 2 bis 4 Kohlenstoffatomen oder einen Phenoxymethylrest bedeutet, wobei x gleich 1 und y gleich Null ist und $R^2$ die obengenannte Bedeutung hat.

Als cyclische Äther werden z.B. Äthylenoxid, Propylenoxid, Styroloxid, Cyclohexenoxid, Oxacyclobutan und Phenylglycidyläther eingesetzt, während als cyclische Formale beispielsweise 1,3-Dioxolan, 1,3-Dioxan, 1,3-Dioxepan und 1,3,6-Trioxocan sowie 4-Methyl-1,3-dioxolan, 4-Phenyl-1,3-dioxolan, 1,3-Dioxonan und 1,3-Dioxocycloheptan- (5) verwendt werden. Als lineare Polyformale eignen sich vor allem Poly(1,3-dioxolan) und Poly(1,3-dioxepan).

Für die Herstellung von Oxymethylenpolymeren mit bestimmten Molekulargewichtsbereichen ist es zweckmäßig, die Polymerisation in Gegenwart eines Reglers durchzuführen. Hierfür eignen sich vor allem Formaldehyddialkylacetale mit 3 bis 9, vorzugsweise 3 bis 5 Kohlenstoffatomen, z.B. Formaldehyddimethylacetal, -di-äthylacetal, -dipropylacetal und -dibutylacetal, sowie niedere aliphatische Alkohole, vorzugsweise Alkanole mit 1 bis 4 Kohlenstoffatomen, z.B. Methanol, Äthanol sowie die verschiedenen Propanole und Butanole. Der Regler wird üblicherweise in einer Menge bis zu 0,5 Gewichtsprozent, vorzugsweise von 0,005 bis 0,1 Gewichtsprozent, bezogen auf die Gesamtmenge der zu polymerisierenden Verbindungen, eingesetzt.

Die nach dem erfindungsgemäßen Verfahren erhaltenen Oxymethylenpolymeren sind makromolekular; die Werte ihrer reduzierten spezifischen Viskosität (RSV) betragen 0,25 bis 2,0, vorzugsweise 0,5 bis 1,5 dl/g (gemessen an einer 0,5 gewichtsprozentigen Lösung des Polymeren in $\gamma$-Butyrolacton, das 2 Gewichtsprozent Diphenylamin als Stabilisator enthält, bei einer Temperatur von 140 °C). Die Kristallitschmelzpunkte der Oxymethylenpolymeren liegen im Bereich von 140 bis 180 °C, ihre Schmelzindexwerte (MFI) betragen 0,1 bis 60, vorzugsweise 1 bis 30 g/10 min (gemessen nach DIN 53 735 bei einer Temperatur von 190 °C und einer Belastung von 2,16 kg).

Die erhaltenen Oxymethylencopolymeren können zusätzlich stabilisiert werden, indem sie wie beschrieben mit Stabilisatoren gegen den Einfluß von Wärme, Sauerstoff und/oder Licht homogen vermischt werden. Die Menge der zugestzten Stabilisatoren beträgt insgesamt 0,1 bis 10, vorzugsweise 0,5 bis 5 Gewichtsprozent, bezogen auf die Gesamtmischung.

Als Stabilisatoren eignen sich vor allem Bisphenolverbindungen, Erdalkalisalze von Carbonsäuren sowie Guanidinverbindungen. Als Bisphenolverbindungen werden hauptsächlich Ester von ein- oder zweifach mit einem 1 bis 4 Kohlenstoffatome enthaltenden Alkylrest kernsubstituierter einbasiger 4-Hydroxyphenylalkansäuren, die 7 bis 13, vorzugsweise 7 bis 9 Kohlenstoffatome enthalten, mit aliphatischen zwei-, drei- oder vierwertigen Alkoholen, die 2 bis 6, vorzugsweise 2 bis 4 Kohlenstoffatome enthalten, verwendet, z.B. Ester der $\omega$-(3-Tert.-butyl)-4-hydroxyphenyl)-pentansäure, $\beta$-(3-Methyl-5-tert.-butyl-4-hydroxyphenyl)-propionsäure (3,5-Di-tert.-butyl-4-hydroxyphenyl)-essigsäure, $\beta$-(3,5-Di-tert.-butyl-4-hydroxyphenyl)-propionsäure oder (3,5-Di-isopropyl-4-hydroxy-phenyl)-essigsäure mit Äthylenglykol, Propandiol-(1,2), Propandiol-(1,3), Butandiol-(1,4), Hexandiol-(1,6), 1,1,1-Tri-methyloläthan oder Pentaerythrit oder 3-(3-tert.-butyl-4-hydroxy-5-methylphenyl)-propionsäure mit Triäthylenglykol.

Als Erdalkalisalze von Carbonsäuren werden insbesondere Erdalkalisalze von aliphatischen, vorzugsweise hydroxylgruppenhaltigen, ein-, zwei- oder dreibasigen Carbonsäuren mit 2 bis 20, vorzugsweise 3 bis 9 Kohlenstoffatomen verwendet, z.B. die Calcium- oder Magnesiumsalze der Stearinsäure, Rizinolsäure,

Milchsäure, Mandelsäure, Äpfelsäure, Zitronensäure oder Propionsäure.

Als Guanidinverbindungen werden Verbindungen der Formel

$$NC - NH - \underset{\underset{NH}{\|}}{C} - NH - R$$

verwendet, in der R ein Wasserstoffatom, eine Cyanogruppe oder einen Alkylrest mit 1 bis 6 Kohlenstoffatomen bedeutet, z.B.
Cyanoguanidin, N-Cyano-N′-methylguanidin, N-Cyano-N′-äthyl-guanidin, N-Cyano-N′-propylguanidin, N-Cyano-N′-tert.-butylguanidin oder N,N′-Dicyanoguanidin.

Die Guanidinverbindung wird gegebenenfalls in einer Menge von 0,01 bis 1, vorzugsweise 0,1 bis 0,5 Gewichtsprozent bezogen auf die Gesamtmischung, eingesetzt.

Auch ist der Einsatz von Polyamiden als zusätzliche stabilisierende Komponente in Mengen von 0,02 bis 1, vorzugsweise 0,03 bis 0,5 Gewichtsprozent, ebenfalls bezogen auf die Gesamtmischung, möglich.

Ferner können dem erfindungsgemäß hergestellten Oxymethylenpolymeren noch andere übliche Zusätze, z.B. bekannte Lichtstabilisatoren wie Benzophenon-, Acetophenon-oder Triazinderivate, Farbstoffe, Pigmente, Verstärkungs-und Füllstoffe ebenfalls zugegeben werden.

Die erfindungsgemäß erhaltenen Oxymethylenpolymeren lassen sich durch alle für thermoplastische Kunststoffe üblichen Verfahren verarbeiten, z.B. durch Spritzgießen, Strangpressen, Extrusionsblasen, Schmelzspinnen und Tiefziehen. Sie eignen sich als Material zur Herstellung von Halbzeug und Fertigteilen wie Formkörper,z.B. Barren, Stäben, Platten, Bändern, Borsten, Fäden, Fasern, Filmen, Folien, Rohren und Schläuchen, sowie Haushaltsartikeln, z.B. Schalen und Bechern, und Maschinenteilen, z.B. Gehäusen und Zahnrädern. Sie sind vor allem als qualitativ hochwertiger technischer Werkstoff zur Herstellung von dimensionsstabilen und maßhaltigen Formteilen verwendbar, deren Oberfläche glatt und schlierenfrei ist.

Beispiele:

(1), (2) und Vergleich. 26 kg/h einer Trioxan-Dioxolan Mischung mit einem Anteil von 3,4 Gew.-% Dioxolan wurden mit 232 ppm $BF_3$-n-Dibutyletherat (= 80 ppm $BF_3$) - gelöst in der 80fachen Menge Cyclohexan - in einen Polymerisationsreaktor (1) gegeben (1/1) und bei etwa 100 °C polymerisiert. Die Rohpolymerisatausbeute betrug 19,5 kg/h = 75 %. Das nicht polymerisierte Trioxan und der gebildete Formaldehyd wurden in Position (3) abgesaugt und in einem Wasserkreislauf adsorbiert. Die stündliche Zunahme an Formaldehyd-Komponenten betrug 6,0 kg. Das Rohpolymerisat wurde über eine Falleitung (2) ungemahlen in einen Zweischneckenextruder (4) eindosiert und bei 190 °C aufgeschmolzen (4a). Eine homogene Mischung aus Hilfsmittel und Desaktivator (2 Gew.-% Wasser/1000 ppm Triäthylamin/10 ppm Soda; Mengen bezogen auf Rohpolymerisat) wurde vor dem Schmelzen (4a/1, Vergleichsbeispiel) oder in die Schmelze (4b/1, erfindungsgemäß) eindosiert. Im Entgasungsabschnitt des Extruders (4c) wurden etwa 0,5 kg/h Formaldehyd-Abkömmlinge unter verminderten Druck über Position (4c/1) entfernt. Die Schmelze trat vom Auslaß des Extruders (4d) direkt in einen Statikmischer (5) und wurde am Einlaß des Mischrohrs mit 1,17 kg/Std. einer Mischung aus 99 Gew.-Teilen Wasser und 1 Gew.-Teil Triäthylamin (entsprechend 600 ppm Amin, bezogen auf die Rohpolymermenge) versetzt (5/1). Die Verweilzeit im Mischrohr betrug 2,5 Minuten. Die Schmelze trat über ein Drosselventil (5/2) in den Doppelschneckenextruder (6). Die Schnecken drehten gleichsinnig, das L/D-Verhältnis ist 30. Die Entspannungszone (6a) wurde auf 0,1 bar gehalten, wobei über Position (6a/1) gasförmige Hilfsmittel, Desaktivatoren und Abspaltprodukte entfernt wurden. In die darauffolgende Druckzone (6b) wurden in Position (6b/1) über einen Kleinextruder unter Druck 0,50 kg/Std. einer geschmolzenen Mischung aus 0,4 Gew.-Teilen ®Irganox 245 (Antioxydationsmittel, Hersteller Ciba-Geigy AG; Basel/Schweiz), 0,1 Gew.-Teilen Tri-Calciumcitrat, 0,02 Gew.-Teilen Calciumpropionat und 0,02 Gew.-Teilen Dicyandiamid zusammen mit 2 Gew.-Teilen eines thermisch stabilisierten Acetalcopolymeren, z.B. das Acetalcopolymere, das erfindungsgemäß erhalten wird, gegeben. In Position (6b/2) wurden 0,59 kg/Std. einer Wasser/Triäthylaminmischung der oben genannten Zusammensetzung zugegeben. In der Zone (6c) wurde ein verminderter Druck von 0,02 bar aufrecht erhalten und über Position (6c/1) die gasförmigen Produkte wie bei (6a/1) entfernt. Nach Passieren der Austragszone (6d) trat der Schmelzstrang aus (7) und wurde nach Abkühlung in einem Waserbad zu Granulat geschnitten und getrocknet.

In Beispiel 2 betrug die Menge des eingesetzten Polymerisationskatalysators 40 ppm $BF_3$.

Soweit keine anderen Angaben gemacht wurden, lag die Massetemperatur der Schmelze in den verschiedenen Prozeßabschnitten bei 185 °C.

Tabelle

| Beisp. | Desaktivator/ Hilfsmittel-Zugabe | $BF_3$ Anteil ppm | MFI g/10 min. | hydrolysierbarer Anteil % | Thermo-*) stab. % | Gelbwert **) |
|---|---|---|---|---|---|---|
| 1 | in die Schmelze | 80 | 6,4 | 0,74 | 0,37 | + 1,4 |
| 2 | in die Schmelze | 40 | 5,3 | 0,53 | 0,19 | - 0,5 |
| Vergleich | vor dem Schmelzen | 80 | 8,6 | 1,12 | 0,86 | + 3,0 |

*) Gewichtsverlust bei 240°C unter Stickstoff, in 60 Min.

**) nach DIN 6167

Als "hydrolysierbarer Anteil" werden sowhol die unstabilen Endgruppen in den Polymerisaten als auch unstabile Polymerisate bezeichnet. Diese Anteile wurden wie folgt bestimmt:
1 g des Polymerisats wurde zu 100 ccm 50 %igem wäßrigen Methanol gegeben, das 0,5 % Ammoniak enthielt. Die erhaltene Mischung wurde in einem geschlossenen Gefäß für 45 Minuten bei 180 ° C erhitzt, um das Polymerisat zu lösen. Der entstehende Formaldehyd, der in der Lösung gelöst wird, wurde quantitativ analysiert und in Gew.-%, bezogen auf das eingesetzt Polymerisat, angegeben.

Die Vorteile des erfindungsgemäßen Verfahrens zeigen die erhaltenen Werte der Beispiele 1 und 2 gegenüber dem Vergleich. Der Schmelzindex ist in Beispiel 1 und 2 kleiner als bei dem Vergleich, d.h. die Abbauerscheinungen sind hierbei deutlich geringer, was sich - parallel dazu- auch in den verminderten Werten für die hydrolysierbaren Anteile ausdrückt. Darüberhinaus weisen die nach Beispiel 1 und 2 erhaltenen Oxymethylencopolymerisate sowohl erheblich bessere Thermostabilitäts- als auch Vergilbungswerte auf.

**Patentansprüche**

1. Kontinuierliches Verfahren zur Entfernung instabiler Anteile aus rohem Oxymethylencopolymerisat, hergestellt durch Polymerisation von Trioxan mit dafür bekannten Comonomeren, das noch Katalysatoren, monomere Ausgangsstoffe und instabile Anteile enthält, durch Behandlung des durch Massepolymerisation von Trioxan mit Comonomeren in einer Polymerisationseinheit bei einer Temperatur über 65 ° C hergestellten Copolymerisats mit basischen Verbindungen als Desaktivatoren in An- oder Abwesenheit von Hilfsmitteln in einer Druckzone, dadurch gekennzeichnet, daß das Rohpolymerisat unmittelbar nach Beendigung des Polymerisationsschrittes in Abwesenheit von Desaktivatoren und Hilfsmitteln vollständig aufgeschmolzen wird und die Desaktivatoren allein oder zusammen mit Hilfsmitteln anschließend mindestens in einer Druckzone in die erhaltene Polymerschmelze unter Druck eingearbeitet und erst danach in einer Entspannungszone die flüchtigen Anteile in An- oder Abwesenheit von Stabilisatoren entfernt werden.

2. Verfahren nach Anspruch 1 dadurch gekennzeichnet, daß Aufschmelzen, Desaktivieren und Wärmebehandlung in Ein- oder Mehrwellenextrudern durchgeführt werden.

3. Verfahren nach Anspruch 1 dadurch gekennzeichnet, daß als Desaktivatoren Carbonate, Hydrogencarbonate, Hydroxyde, Oxyde, Phosphate, fluoride von Alkali- und Erdalkalimetallen und aliphatische, aromatische und araliphatische Amine oder Mischungen daraus verwendet werden.

4. Verfahren nach einem oder mehreren der Ansprüche 1 bis 3 dadurch gekennzeichnet, daß organische Desaktivatoren in Mengen von 20 bis 5000 ppm und anorganische Desaktivatoren in Mengen von 1 bis 100, jeweils bezogen auf die Menge des Oxymethylen-Rohpolymerisats, eingesetzt werden.

5. Verfahren nach einem oder mehreren der Ansprüche 1 bis 4 dadurch gekennzeichnet, daß als Hilfsmittel Wasser und/oder damit verdünnbare Alkohole eingesetzt werden.

6. Verfahren nach einem oder mehreren der Ansprüche 1 bis 5, dadurch gekennzeichnet, daß Hilfsmittel in Mengen von 2 bis 15 Gew.-%, bezogen auf die Menge des eingesetzten Copolymerisats, zugegeben werden.

7. Verfahren nach einem oder mehreren der Ansprüche 1 bis 6 dadurch gekennzeichnet, daß die Polymerschmelze für 1 bis 30 Minuten bei Temperaturen oberhalb ihres Schmelzpunktes bis maximal 260 °C gehalten wird.

8. Verfahren nach einem oder mehreren der Ansprüche 1 bis 7, dadurch gekennzeichnet, daß die Polymerschmelze durch Behandlung bei Drücken zwischen 0,001 bar und Atmosphärendruck von flüchtigen Abbauprodukten befreit wird.

9. Verfahren nach einem oder mehreren der Ansprüche 1 bis 7, dadurch gekennzeichnet, daß die Polymerschmelze durch Behandlung bei Drücken zwischen 0,005 bis 0,5 bar von flüchtigen Abbauprodukten befreit wird.

10. Verfahren nach einem oder mehreren der Ansprüche 1 bis 7, dadurch gekennzeichnet, daß die Polymerschmelze durch Behandlung bei Drücken zwischen 0,01 bis 0,2 bar von flüchtigen Abbauprodukten befreit wird.

11. Verfahren nach einem oder mehreren der Ansprüche 1 bis10, dadurch gekennzeichnet, daß die Zugabe von Desaktivatoren und/oder Hilfsmitteln in die Polymerschmelze ein oder mehrmals durchgeführt wird.

12. Verfahren nach einem oder mehreren der Ansprüche 1 bis 11, dadurch gekennzeichnet, daß die Desaktivatoren und/oder Hilfsmittel enthaltende Schmelze für insgesamt 30 Sekunden bis 10 Minuten unter einem Druck von 5 bis 100 bar gehalten wird.

13. Verfahren nach einem oder mehreren der Ansprüche 1 bis 12, dadurch gekennzeichnet, daß die Polymerschmelze mehrmals einer alternierenden Behandlung unter Druck und vermindertem Druck unterworfen wird.

14. Verfahren nach einem oder mehreren der Ansprüche 1 bis 13, dadurch gekennzeichnet, daß festes Rohpolymerisat und Trioxan/Formaldehyd-Gase unmittelbar nach Verlassen des Polymerisationsaggregates voneinander getrennt werden und der gasförmige Anteil einer separaten Aufbereitung zugeführt wird.

15. Verfahren nach einem oder mehreren der Ansprüche 1 bis 14, dadurch gekennzeichnet, daß die Zeitspanne zwischen dem Verlassen des Rohpolymerisats aus dem Polymerisatonsaggregat und dem Erreichen des homogenen Schmelzzustandes 3 bis 30 Sekunden beträgt.

16. Verfahren nach einem oder mehreren der Ansprüche 1 bis 15, dadurch gekennzeichnet, daß dem Rohpolymerisat 0,1 bis 10 Gew.-%, bezogen auf die Gesamtmischung, an Stabilisatoren zugegeben wird.

17. Verfahren nach einem oder mehreren der Ansprüche 1 bis 15, dadurch gekennzeichnet, daß dem Rohpolymerisat 0,5 bis 5 Gew.-%, bezogen auf die Gesamtmischung, an Stabilisatoren zugegeben wird.

18. Verfahren nach einem oder mehreren der Ansprüche 1 bis 17, dadurch gekennzeichnet, daß den Oxymethylenpolymeren andere übliche Zusätze zugegeben werden.

**19.** Verwendung der durch das Verfahren nach einem oder mehreren der Ansprüche 1 bis 18 erhaltenen Oxymethylenpolymere als Material zur Herstellung von Halbzeug und Fertigteilen.

**20.** Verwendung nach Anspruch 19 zur Herstellung von dimensionsstabilen und maßhaltigen Formteilen.

## Claims

**1.** A continuous process for the removal of unstable constituents from crude oxymethylene copolymer which has been prepared by polymerization of trioxane with comonomers known for this purpose and which also contains catalysts, monomer starting materials and unstable constituents, by treating the copolymer, prepared by bulk polymerization of trioxane with comonomers in a polymerization unit at a temperature above 65 °C, with basic compounds as deactivators in the presence or absence of auxiliaries in a pressure zone, which comprises completely melting the crude polymer in the absence of deactivators and auxiliaries immediately after completion of the polymerization step, and subsequently incorporating the deactivators, alone or together with auxiliaries, into the resultant polymer melt under pressure in at least one pressure zone, and only then removing the volatile constituents in a decompression zone in the presence or absence of stabilizers.

**2.** The process as claimed in claim 1, wherein the melting, deactivation and heat treatment are carried out in single- or multiscrew extruders.

**3.** The process as claimed in claim 1, wherein the deactivators used are carbonates, hydrogen-carbonates, hydroxides, oxides, phosphates and fluorides of alkali and alkaline earth metals and aliphatic, aromatic and araliphatic amines, or mixtures thereof.

**4.** The process as claimed in one or more of claims 1 to 3, wherein organic deactivators are employed in amounts of from 20 to 5000 ppm and inorganic deactivators are employed in amounts of from 1 to 100 ppm, in each case based on the amount of crude oxymethylene polymer.

**5.** The process as claimed in one or more of claims 1 to 4, wherein the auxiliaries employed are water and/or alcohols which can be diluted therewith.

**6.** The process as claimed in one or more of claims 1 to 5, wherein auxiliaries are added in amounts of from 2 to 15% by weight, based on the amount of the copolymer employed.

**7.** The process as claimed in one or more of claims 1 to 6, wherein the polymer melt is kept at temperatures of above its melting point to a maximum of 260 °C for from 1 to 30 minutes.

**8.** The process as claimed in one or more of claims 1 to 7, wherein the polymer melt is freed from volatile degradation products by treatment at pressures of from 0.001 bar to atmospheric pressure.

**9.** The process as claimed in one or more of claims 1 to 7, wherein the polymer melt is freed from volatile degradation products by treatment at pressures of from 0.005 to 0.5 bar.

**10.** The process as claimed in one or more of claims 1 to 7, wherein the polymer melt is freed from volatile degradation products by treatment at pressures of from 0.01 to 0.2 bar.

**11.** The process as claimed in one or more of claims 1 to 10, wherein the addition of deactivators and/or auxiliaries to the polymer melt is carried out once or more than once.

**12.** The process as claimed in one or more of claims 1 to 11, wherein the melt containing deactivators and/or auxiliaries is kept at a pressure of from 5 to 100 bar for a total of from 30 seconds to 10 minutes.

**13.** The process as claimed in one or more of claims 1 to 12, wherein the polymer melt is subjected a number of times to alternating treatment under pressure and reduced pressure.

14. The process as claimed in one or more of claims 1 to 13, wherein solid crude polymer and trioxane/formaldehyde gases are separated from one another immediately after leaving the polymerization unit, and the gaseous constituent is fed to a separate work-up step.

15. The process as claimed in one or more of claims 1 to 14, wherein the time span between the crude polymer leaving the polymerization unit and achieving the homogeneous molten state is from 3 to 30 seconds.

16. The process as claimed in one or more of claims 1 to 15, wherein from 0.1 to 10% by weight, based on the total mixture, of stabilizers are added to the crude polymer.

17. The process as claimed in one or more of claims 1 to 15, wherein from 0.5 to 5% by weight, based on the total mixture, of stabilizers are added to the crude polymer.

18. The process as claimed in one or more of claims 1 to 17, wherein other conventional additives are added to the oxymethylene polymers.

19. The use of the oxymethylene polymers obtained by the process as claimed in one or more of claims 1 to 18 as a material for the production of semifinished and finished parts.

20. The use as claimed in claim 19 for the production of dimensionally stable moldings.

## Revendications

1. Procédé en continu d'élimination de composants instables d'un copolymérisat brut d'oxyméthylène, préparé par polymérisation de trioxane avec des comonomères connus à cette fin, qui contient encore des catalyseurs, des matières premières monomère et des composants instables, en traitant le copolymérisat préparé par polymérisation en masse de trioxane avec des comonomères dans une unité de polymérisation à une température supérieure à 65 °C avec des composés basiques tels que des désactiveurs en présence ou en l'absence d'agents auxiliaires dans une zone de pression, caractérisé en ce que le polymérisat brut est mis totalement en fusion immédiatement après la fin de l'étape de polymérisation en l'absence de désactiveurs et d'agents auxiliaires et le désactiveurs sont incorporés, sous pression, seuls ou conjointement avec des agents auxiliaires ensuite au moins dans une zone de pression dans la masse fondue du polymère obtenu et seulement ensuite les constituants volatils sont éliminés dans une zone de détente en présence ou en l'absence des stabilisants.

2. Procédé selon la revendication 1, caractérisé en ce que la mise en fusion, la désactivation et le traitement à chaud sont réalisés dans une extrudeuse mono- ou multivis.

3. Procédé selon la revendication 1, caractérisé en ce qu'on utilise, comme désactiveurs, des carbonates, des hydrogénocarbonates, des hydroxydes, des oxydes, des phosphates, des fluorures de métaux alcalins et alcalino-terreux et des amines aliphatiques, aromatiques et araliphatiques ou leurs mélanges.

4. Procédé selon l'une ou plusieurs des revendications 1 à 3, caractérisé en ce que les désactiveurs organiques sont utilisés dans des quantités allant de 20 à 5000 ppm, et les désactiveurs inorganiques sont utilisés dans des quantités allant de 1 à 100, à chaque fois rapportées à la quantité du polymérisat brut d'oxyméthylène.

5. Procédé selon l'une ou plusieurs des revendications 1 à 4, caractérisé en ce qu'on utilise, comme agents auxiliaires, de l'eau et/ou des alcools diluables dans l'eau.

6. Procédé selon l'une ou plusieurs des revendications 1 à 5, caractérisé en ce que l'agent auxiliaire est introduit dans des quantités allant de 2 à 15 % en poids, par rapport à la quantité du copolymérisat utilisé.

7. Procédé selon l'une ou plusieurs des revendications 1 à 6, caractérisé en ce que la masse fondue du polymère est maintenue pendant 1 à 30 minutes à des températures se situant au dessus leur point de fusion et allant au maximum jusqu'à 260 °C.

8. Procédé selon l'une ou plusieurs des revendications 1 à 7, caractérisé en ce que la masse fondue du polymère est débarrassée des produits de dégradation volatils par traitement à des pressions comprises entre 0,001 bar et la pression atmosphérique.

9. Procédé selon l'une ou plusieurs des revendications 1 à 7, caractérisé en ce que la masse fondue du polymère est débarrassée des produits de dégradation volatils par traitement à des pressions comprises entre 0,005 et 0,5 bar.

10. Procédé selon l'une ou plusieurs des revendications 1 à 7, caractérisé en ce que la masse fondue du polymère est débarrassée des produits de dégradation volatils par traitement à des pressions comprises entre 0,01 et 0,2 bar.

11. Procédé selon l'une ou plusieurs des revendications 1 à 10, caractérisé en ce que l'addition des désactiveurs et/ou des agents auxiliaires dans la masse fondue du polymère est réalisée une ou plusieurs fois.

12. Procédé selon l'une ou plusieurs des revendications 1 à 11, caractérisé en ce que la masse fondue contenant les désactiveurs et/ou les agents auxiliaires est maintenue au total pendant une durée de 30 secondes à 10 minutes sous une pression de 5 à 100 bar.

13. Procédé selon l'une ou plusieurs des revendications 1 à 12, caractérisé en ce que la masse fondue du polymère est soumise plusieurs fois à un traitement alterné sous pression et sous pression réduite.

14. Procédé selon l'une ou plusieurs des revendications 1 à 13, caractérisé en ce que le polymérisat brut solide et les gaz trioxane/formaldéhyde sont séparés l'un de l'autre immédiatement après avoir quitté le dispositif de polymérisation et les constituants gazeux sont dirigées en vue d'un traitement séparé.

15. Procédé selon l'une ou plusieurs des revendications 1 à 14, caractérisé en ce que le court espace de temps entre la sortie du polymérisat brut du dispositif de polymérisation et l'obtention de l'état de fusion homogène est de 3 à 30 secondes.

16. Procédé selon l'une ou plusieurs des revendications 1 à 15, caractérisé en ce qu'on introduit dans le polymérisat brut de 0,1 à 10 % en poids de stabilisant, rapportés au mélange total.

17. Procédé selon l'une ou plusieurs des revendications 1 à 15, caractérisé en ce qu'on introduit dans le polymérisat brut de 0,5 à 5 % en poids en stabilisant, par rapport au mélange total.

18. Procédé selon l'une ou plusieurs des revendications 1 à 17, caractérisé en ce qu'on introduit dans le polymère d'oxyméthylène d'autres additifs classiques.

19. Utilisation du polymère d'oxyméthylène obtenu par le procédé selon l'une ou plusieurs des revendications 1 à 18 comme matériau pour la préparation de produits semi-finis et de pièces prêtes à l'emploi.

20. Utilisation selon la revendication 19 pour la préparation de pièces moulées de dimensions précises et stables.

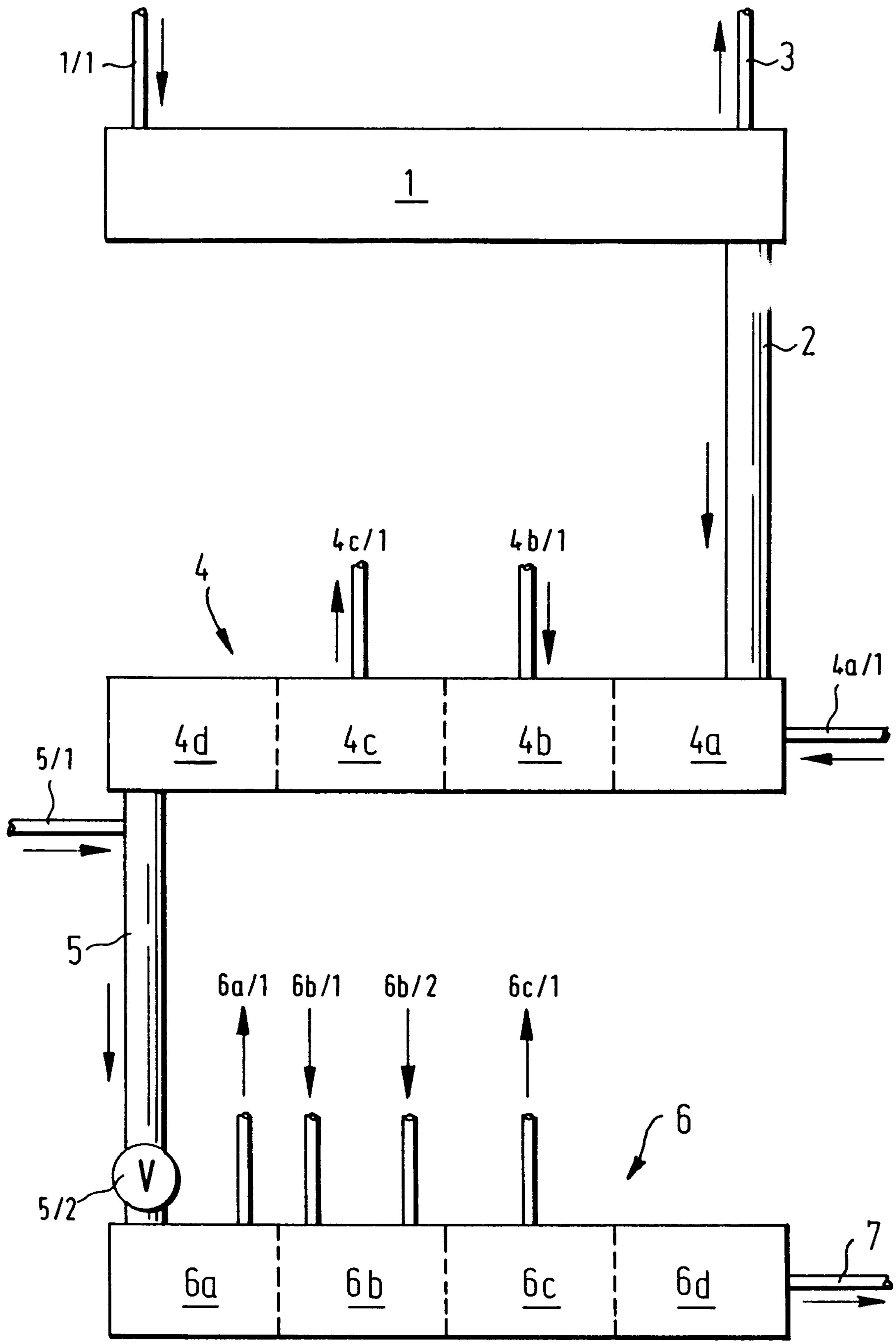
1/1
3
1
2
4
4c/1
4b/1
4a/1
4d
4c
4b
4a
5/1
5
6a/1
6b/1
6b/2
6c/1
6
V
5/2
7
6a
6b
6c
6d